# EUROPEAN PATENT APPLICATION

(11) **EP 3 569 066 A1**
(43) Date of publication of application: **20.11.2019**
(21) Application number: 17896316.1
(22) Date of filing: 18.04.2017
(51) Int. Cl.: A01N 31/00, A01P 1/00

(54) **ECOLOGICAL FORMULA HAVING MULTIPLE ANTIMICROBIAL ACTION (BACTERICIDAL, FUNGICIDAL AND ANTI-VIRAL) BASED ON COMMERCIAL MOLECULES**

(30) Priority: 13.01.2017 DO 2017000009
(71) Applicant: Arias Dipre, Juan José, 91000 San Cristóbal (DO)
(72) Inventor: Arias Dipre, Juan José, 91000 San Cristóbal (DO)
(74) Representative: Garcia González, Sergio
(86) International application number: PCT/DO2017/000003
(87) International publication number: WO 2018/145716

(57) **Abstract**

The invention relates to the application of a formula for controlling pests of microbial origin by combining hydrogen peroxide, 2-hydroxy-1,2,3-tricarboxylic acid and water treated as a solvent, generating a method for controlling pests of microbial origin, the formula having biocidal and disinfectant activity on a complex range of microorganisms such as bacteria, fungi, yeasts, endospores and viruses and killing Gram-positive bacteria, Gram-negative bacteria, microbacteria, Staphylococcus aureus, Streptococcus mutans and Candida albicans. The effects of the formula are lethal for microorganisms with aerobic metabolism or anaerobic metabolism, with very positive effects in citrus fruit plantations with citrus greening disease (HLB) and cocoa plantations, with organic certification for exportation, which are affected by fungi, and for any other disease of microbial origin affecting harvests of fruits and vegetables. The formula can also be used for the treatment of vegetables for exportation with organic certification. In addition, microbial diseases in animals and humans can be treated and cured with this formula. The formula can be used for hygiene on surfaces, by means of cleaning products, paint formulas, cosmetics, beauty products, home economy materials, and as an antimicrobial additive for extending the shelf life of products.

## Description

### FIELD OF THE INVENTION

The product is the result of a process of innovation of derived from research and development in the field of bioeconomy based on knowledge of chemistry and microbiology, with a view to the application of ecologically clean technologies in food production processes, both in the production of raw materials and in finished products.

### DESCRIPTION

The product is a formula dedicated to attack the contamination of microbial origin, which includes the elimination, reduction and inhibition of bacteria, fungi, yeasts and viruses in industrialized products, in agriculture, in the production of drugs and products for hygiene, cleaning and disinfection of surfaces. Due to their nature and origin, they have harmful effects against pests of microbial origin. Its action is also effective against larvae if the product is applied before it becomes a worm, especially fruits and vegetables when the fruit is still green or new.

When combating these pests the product has the profile, determined by its action against the described predators, regardless of where they are, especially when dealing with tropical environments. In this regard, it should be noted that most of the diseases that occur in agricultural production are of microbial origin that directly affect agricultural plantations. On the other hand, the pests indicated also affect industrial facilities, public buildings, the construction industry. In this sense, a product that is manufactured with beneficial ingredients or friendly with the environment and with the health of the people, presents favorable profiles to be used in buildings, production areas and facilities where the quality controls must be very strict, such as food industry, pharmaceutical, organic agriculture, facilities and means for the export of products in general, to eliminate pests or to prevent their action.

It is an ecological product friendly to the environment and to the health of people, animals and plants with antimicrobial properties and disinfectant in agriculture that can be applied to crops of fruit and vegetables, such as avocado, coffee, mango, coconut, palm, corn crops, beans, okra, sugar cane, oranges, tangerines, lemons, passion fruit, cocoa, pineapples, banana, banana and other similar crops, with the aim of combating, fungi, bacteria, yeast, viruses and larvae In addition, it is recommended in sustainable agricultural production, with organic certification or in the process of certification. It is totally friendly with the environment.

It possesses biocidal activity and disinfectant over a complex range of microorganisms, such as: bacteria, fungi, yeasts, endospores and viruses. It kills Gram positive, Gram negative bacteria, mycobacteria, *Staphylococcus aureus, Streptococcus mutans,* and *Candida albicans.* Its antimicrobial effects are deadly, both in microorganisms with aerobic and anaerobic metabolism. Its ingredients act synergistically as sporicides. It is a disinfectant in soils, trees, fresh fruits and vegetables. Applications as a sterilizer: It is a disinfectant at 1% dilutions. It has a descaling action on organic material. Its ingredients act creating a synergistic association that removes and kills microorganisms.

In agricultural plantations the application is made in a soft layer from the air with conventional fumigation systems with spray pumps, or simply sprayed in a fine spray to parts such as branches stems and trunks. The product is systemic and can cure the tree or plant completely, with periodic applications until the disease subsides. Being ecological it does not act as a common exterminator, its activity is slow and prolonged, it does not create secondary effects, its results are ecologically clean.

The formula has been applied in citrus groves, such as oranges, tangerines, and lemons, against the terrible disease called citrus death or sadness, in addition to the gram negative bacteria, which produces the terrible disease known as: The HLB or huanglongbing , this name is derived from Mandarin meaning "yellow dragon", caused by the bacterium *Candidatus liberibacter* bacteria, but due to the appearance that the sick plant acquires, it was also called greening or citrus greening. There is no variety that resists the attack of this disease, the mechanisms of dispersion and survival of this microorganism are so effective that they can cause serious damage to all the commercial species of citrus grown in the world.

Tests have shown excellent results against this serious citrus disease. Applications in plantations of orange, grapefruit, mandarin and lemon totally affected by this disease and virtually dead, are fully recovered, after applying the formula, within 2 to 3 weeks. The cured plants acquire a high vitality and their harvests become very fertile.

In plantations affected with fungi, the results are excellent, recovering the affected plants and preventing the spread of fungi to the edible parts of the fruit, thus avoiding the development of mycotoxins that can generate carcinogenic diseases. The product was applied in cocoa plantations with organic certification for export to Europe and the United States. The product acts against insect larvae, parasite eggs, symbiotic systems between bacteria and phytoparasites such as nematodes, as well as against mites.

It is applied as disinfectant material in dilutions of 1% in all the applications indicated, as well as in the treatment of the packaging of export vegetables, such as sacks, boxes, and others, in the treatment of fresh vegetables for export, applying small doses in a superficial way in fresh fruits and vegetables, in order to prevent or eliminate the presence of microorganisms. It is effective in hygiene and disinfection in warehouses where vegetables, fruits, grains, and cereals are deposited, as well as in the treatment of packaging of seeds and grains, to avoid damage by fungi or bacteria.

It has been applied in coffee plantations, where it has shown extraordinary results in the elimination of plagues like coffee berry borer, the rust, coffee leaf miner, coffee leaf spot, and other affections of that important agricultural production.

Given its antimicrobial and disinfectant properties in livestock farms, poultry, apiculture, among others, the product has beneficial uses in animal health and an environmental impact of high ecological value on livestock farms, pigs, poultry farms, bee farms, rabbit farms, and veterinary clinics. It can be applied in hygiene, cleaning of the interior and exterior of facilities, to raise the quality in the general health of farm animals, with the aim of preventing diseases caused by fungi, bacteria, yeasts, viruses and larvae. It is also recommended in production with organic certification or in the process of certification. The product is totally ecological.

It has biocidal and disinfectant activity on a complex range of microorganisms, mentioned above (in agricultural applications), including salmonellas in eggs in agricultural farms and other microbial affections. Its ingredients act synergistically as sporicides. Disinfectant in facilities, diseases of microbial and viral origins. Applications as a sterilizer. It is an active agent at dilutions of 1%. It has a descaling action on organic material. Its ingredients act creating a synergic association that removes and kills microorganisms.

Among its applications and uses against diseases of microbial and parasitic origin in farms and breeding and animal care facilities, the application is made always after washing in a soft layer with conventional fumigation systems, spray pumps, or simply sprayed in a fine spray in pens, being left in the areas as a form of preventive protection. If the areas are not washed, the effect is the same, only the application dose must be increased.

The product can completely cure animals affected by diseases of microbial origin, including viral diseases, with periodic applications until the disease subsides. Being ecological does not act as a common exterminator, its activity is slow and prolonged, it does not create secondary effects, its results are ecologically clean.

In the process of hygiene and disinfection, the product is applied after general washing, if possible after locating the sources of contamination in the facilities. The product is applied to eliminate sources of contamination and to prevent future contamination. In the source of contamination, the application must be more intense, applying concentrations of up to 5%, depending on the degree of contamination. For preventive actions, after washing the installations, it is sprayed in a thin layer, being left in the area as a form of preventive protection.

In the direct care of the animal health of livestock and domestic farms to prevent bacterial and fungal diseases in the animal, you can apply periodic baths with the product at 1%, in periods of 15 days to a month, depending on the degree of exposure, this dose is suitable for farm animals, such as cows, pigs, and rabbits, and domestic animals, like dogs, cats and others.

To heal wounds, fungal infections or bacteria in livestock or domestic animals, proceed by placing directly in the affected areas of the animal after bathing a dose of the product at 5%, which must cover the affected area completely. The application in these cases should be once a day, until the disease ceases. If the disease completely covers the body of the animal or more than a quarter of its outer surface, it is necessary to bathe the animal weekly with 1% solutions, until the disease ceases.
In the process of hygiene and disinfection in poultry farms, the product is applied after general washing if possible after locating the sources of contamination in the facilities. The product is applied to eliminate sources of contamination and to prevent future contamination.

The most common sources of contamination in poultry farms are the straw beds where the hens defecate, which are not usually changed quickly because of the cost. In these, the product should be applied periodically every three days as a 5% solution. If it is applied at that rate and in that concentration, the bed can last longer before being changed. As a preventive measure, after washing the installations, they should be sprayed with a 1% solution of the product, in a thin layer, being left in the area as a form of preventive protection.

In apiculture farms, apiary boxes should be treated by spraying the product into them before use or when they are changed due to deterioration. The product effectively controls diseases caused by fungi and bacteria that may occur in beekeeping production, reducing reduce their productivity. Applications are made in concentrations of 1%.

The antimicrobial and disinfectant properties of the product adapts to any formula of cleaning agents and surface disinfectants for walls, floors, bathrooms, hands, and working tools in different areas of the industry with the aim of combating fungi, bacteria, yeasts, viruses and larvae. It produces a highly positive impact on the health of people, animals and plants.

It is a disinfectant at 1% dilutions. It can be applied as a sterilizer and disinfectant of medical instruments, respirators and endoscopes. It is a disinfectant of hemodialyzers at 1% dilutions (can be used in smaller concentrations).

It can be used for hygiene and disinfection in schools, hospitals, clinics, libraries, museums, churches, cathedrals, public monuments, food industry, pharmaceutical and other industrial facilities, hotels, restaurants and similar facilities, where hygiene is a fundamental requirement, since the product is harmless to the health of people. Its activity does not create side effects, and its results are ecologically clean.

It is applied as a disinfectant material in 1% dilutions in all indicated applications, as well as in the treatment of the packaging of certified export products, such as sacks, boxes, and others, in the treatment of fresh vegetables for export, applying small doses superficially in fresh fruits and vegetables, in order to prevent or eliminate the presence of microorganisms. It is effective in hygiene and disinfection in warehouses where canned and fresh vegetables, fruits, grains, cereals, breads, meats, and dairy are deposited, as well as in the treatment of seed and grain packaging, to avoid damage by fungi or bacteria.

The product is applicable against all types of epidemic of microbial origin, such as typhoid fever, cholera, leptospirosis and others. For such purposes, general fumigations are carried out in the areas affected by the epidemic and in generalized or localized sources of contamination through periodic applications, with 1% solutions, using, spray pumps or any other conventional fumigation system.

Its content adapts to any formula for beauty products, paints, dyes, commercial inks and others to produce a preventive effect against attacks by various microorganisms on products of mass use. It produces a highly positive impact on the health of people, animals and plants. It is used in all product formulas with high content of water, where microorganisms can deteriorate its composition and denaturalize its content reducing its natural effects.

It can be used as a preservative in various cosmetic and cleaning products. Its effect is very widespread, especially in products for conditioning hair, shampoo, body wash, moisturizing lotions for the body, creams, and others.

It can be used to prolong the life of industrial products and prevent the transfer of pathogenic microorganisms when they come in contact with people in the manufacture of paints, enamels, cooling or antifreeze agents, coolant, ArmorAll® cooling liquids, cleaning agents, and tempera, in products for personal hygiene such as hand sanitizer, hair shampoo, medicated soaps to treat skin diseases, fungicidal and bactericidal soaps, treatments for diseases of the scalp and skin, adhesive and rubber brighteners, cleaning agents, baths foam, preservatives, cosmetics, detergents, latex emulsions, cutting fluids in metals, body and hair gels, masks, pesticides, pigments, sanitary products, fabric softeners, printing inks, and cleaning towels.
The formula has shown an extraordinary effect on cutaneous or dermal diseases caused by fungi (skin, nails, bumps) and gram-positive and gram-negative bacteria, such as *Staphylococcus aureus* (skin infections and capillary diseases of microbial origin).

### Characteristics and Benefits:

- The lowest dose (more dilution)
- Spectrum of broader activity
- Certification of obtaining improvements
- It is supplied as an aqueous solution easily incorporated in cosmetic formulations.
- Good compatibility with surfactants and emulsifiers, regardless of their ionic nature.
- Effective throughout the range of pH that is normally found in cosmetics.
- No color or smell conferred to cosmetic products.
- 100% Ecological.
- Environmentally acceptable.
- Quickly biodegradable.

The new formula is prepared in a simple way, from a binary mixture of mutually miscible and polar ingredients. It is recommended to produce and market the concentrated product to be used on a large scale as a dilution of the concentrate, to a minimum of one 1% (w/v). This means that for example about 3,785 kg of the concentrate, would produce an equivalent of 100 gallons at a dilution of 1% (this means that a little less than one gallon of the concentrate, which actually weighs about 5 kg, can generate 100 gallons of the diluted solution or approximately 378.5 kg), which substantially reduces production, transport and distribution costs, this dilution is sufficient to eliminate a high microbial population within 15 to 20 minutes, after application, in any medium, under environmental conditions.

### ANTECEDENTS OF THE INVENTION

The application ES2394922 (A1) ECOLOGICAL LIQUID ADDITIVE COMPOSITE FOR FOSSILE FUELS DERIVATED FROM OIL published on 06/02/201 describes a liquid ecological additive for liquid fuels derived from petroleum characterized because it consists of: propylbenzene, ferrocene, mesitilene, trimethylbenzene, light aromatic fraction naphtha, Methyl acetate, Propanone, Biocide, Fungicide, Antioxidant, Emulsifier.

The application ES2232321 USE OF MACROLIDOS IN THE CONTROL OF PESTS of Syngenta Participations AG, Schwarz Walldellee, 2015 Basel, CH, published on 05/16/2005, describes the use of macrolides in the control of pests, more specifically: (A) a new method for controlling pests in and on the transgenic crops of useful plants, such as a macrolide compound, (B) a method to protect the propagation material and organs of plants formed after the attack by pests, with such a macrolide compound; and (C) a method to control wood pests and molluscs with a macrolide compound.

The application MX2014004160 (A) MIXED AGROCHEMICAL COMPOSITION OF EMULSION INCLUDING PESTICIDE OF ORGANIC PHOSPHORUS AND CHLOROPYRIN ISHIHARA SANGYO KAISHA [JP] + (ISHIHARA SANGYO KAISHA, LTD published on 07/28/2014 relates to a mixed agrochemical emulsion composition comprising: an organic phosphorous pesticide represented by formula (I) (wherein R1 represents a C1-4 linear or branched alkyl group; R2 represents a C1-4 linear or branched alkyl group; R3 represents a nitrogenated heterocyclic group which may have a substituent or a group -OR4 (wherein R4 represents a nitrogenated heterocyclic group which may have a substituent); and X and Y independently represent an oxygen atom or a sulfur atom, wherein Y is a sulfur atom when X is an oxygen atom and Y is an oxygen atom when X is a sulfur atom); chlorpicrin; and a nonionic surfactant. The composition has excellent storage stability and excellent emulsifying properties in water and can be sprayed and applied conveniently by diluting the composition with water, despite the fact that both chlorpicrin and the organic phosphorous pesticide, which are effective for the control of pests, are contained.

The application MX2013005889 PESTICIDE COMPRISING A WATER-FREE COMPOSITION AND COPOLYMERS WITH GROUPS OF SULPHONIC ACIDS of BASF SE [DE], published 01/08/2013, provides a composition comprising a) at least 1 % by weight of copolymer synthesized from monomers M comprising i) at least one ethylenically unsaturated monomer M1 containing sulfonic acid groups, ii) at least one monomer M2 selected from C1-C4 alkyl (meth)acrylates, and iii) at least one monomer M3 selected from C6-C22 alkyl (meth)acrylates; b) at least 10% by weight of organic solvent; c) not more than 10% by weight of water; d) at least 1 % by weight of water-insoluble pesticide; and e) at least 1 % by weight of nonionic surfactant. Further provided is a process for preparing this composition by contacting the copolymer, the organic solvent, the water-insoluble pesticide, and the nonionic surfactant. The invention relates additionally to the agrochemical application of the composition.

The consulted patents indirectly reaffirm the importance, justification, necessity and scope of our formula as an original invention, with positive effects in terms of its multi-effect pesticide properties, with a friendly environmental impact, due to the fact that its ingredients are naturally integrated into the different ecosystems in the form of organic substrates, without leaving harmful chemical residues and can also be taken to any foreign market. It can also be applied to any type of vegetables or fruits for export of any origin, be, organic , ecological, with or without certification, without causing any type of rejection because it can overcome the different sanitary barriers.

A document of the United Nations Development Program (UNDP) National Program. Initial assistance project for the authorization of the Dominican Republic in compliance with its Obligations with the Stockholm Convention on Persistent Organic Pollutants, author Rolando Bodden, national consultant. Santo Domingo, D.N. 2007.

http://www.ambiente.gob.do/cms/archivos/tematico/cop/PDF/Inventario%20PLAG UICIDAS.pdf. The document states that: " On March 15, 2007, a certification was received from the Secretary of State for Agriculture, the Department of Plant Health, Division of Pesticide Registration (Annex 6), confirming that the department has not authorized imports, since June 4, 1991, of the pesticides Aldrin, Chlordane, DDT, Dieldrin, Endrin, Heptachlor, Hexachlorobenzene and Toxaphene, which was endorsed by Decree No. 217-91. In relation to the pesticide Mirex, its registration has not been requested in the country. "

On the other hand the same document presents a list of pesticides brought to the country from different nations, between 1975 and 1983, from Afghanistan, Argentina, Germany, Belgium, Brazil, Colombia, Costa Rica, China, El Salvador, Spain, United States, Guatemala, Hong Kong, Indonesia, Japan, Mexico, the Netherlands, Panama, Puerto Rico, Trinidad & Tobago and Venezuela, including the COP's. The value of this type of imports rose from around 10 million to about 17 million in the period 1978/81. While between 2002 and 2004 the value of pesticide imports decreased from 32 million in 2002 to 22,000 million in 2004, according to the cited document.

An investigation conducted by the CHEMISTRY INSTITUTE OF THE UNIVERSIDAD AUTÓNOMA DE SANTO DOMINGO (UASD). It notes that some 17 substances were identified and quantified, which include the list of substances defined as dangerous by the Stockholm Convention, especially chlorinated organ compounds, in 18 rivers of the Dominican Republic, in water samples and marine sediments. Nine of these pollutants appear, with levels above the values established by the standards (NOAA). These were identified as: DDT, Heptachlor, Aldrin, Dieldrin, Endrin, Dichlorodiphenyltrichloroethane (4,4-DDT), α-Endosulfan, α-Hexachlorobenzene (b-HCB, lindane), Methoxychlor, Dichlorodiphenyldichloroethane (4,4-DDD), found above the established values.

On the other hand, the digital newspaper Diario Libre of February 23 of the current year has published the following information: "The detentions of shipments from the Dominican Republic in the U.S. are growing. According to the DICOEX report of the first half of 2013, the causes of the arrests were mainly due to products containing pesticide residues (35%), unhealthy (11%), lack of information on the label (11%) and mislabeled for the location of information (9%), among others. In that period, 41 Dominican companies were affected." httip://www.diariolibre.com/economia/2014/04/23/i577801.

According to a study of the Agricultural and Agroindustrial Products Market in New York City, United States of America, under the DR-CAFTA Framework, March 2011, Challenges for Farmers - Pesticides, Water Resources and Immigration / Strength Issues labor, are bringing new challenges to farmers. As we all know, the industry is globalized and that means more exposure to pesticides, see SECTION 2 of this document, point 4.4, List of pesticides authorized by EPA / FDA for the 9 products selected in this Demand Study Update. http://www.seic.gov.do/media/10818/Actualizaci%C3%B3n

Products Chosen in the Study Subject to FDA Import Alert 99-14 from the Dominican Republic. Products Reason for Alert Importers.

Some of the products are: pods, fresh aubergines, peas, and peppers. One of the fundamental reasons for the alert is the possible presence of pesticide residues. Laboratory tests according to 99-14 are required for the following illegal pesticide residues in fresh products imported to the US from RD (more than 100):
- Chinese long pods (Yardlong Beans): Methamidophos, Monocrotophos.
- Aubergines (long and regular): Monocrotophos, Acephate, Dicrotophos, Profenophos, Metamidophos.
- Chilli (all varieties): Monocrotophos, Profenofos.
- Chinese pods (snow peas):
   As a result of this alert, importers must have a laboratory certification endorsed by the FDA. The link to access the Import Alert 99-14, the Act that governs the export of peppers to the United States of America, according to the Food and Drug Administration (FDA). http://www.accessdata.fda.gov/cms ia/importalert 261.html.

History of rejections of the FDA with respect to the Products Selected in this study from the Dominican Republic. Each time an import is stopped for alleged violation of regulations, the FDA issues a notice to the importer specifying the nature of the alleged violation. The importer has the right to an informal hearing within a period of 10 working days (extendable) to give testimony on the admissibility of the product. If within that period the importer does not present evidence that the product complies with the regulations or present a plan to bring the product to compliance, then the FDA rejects the admission through a notice called, "Notice of Refusal of Admission."

The panorama presented by the Dominican Republic regarding compliance with health policies, in relation to the final elimination of Persistent Organic Pollutants (POPs), poses a serious commitment to the development of a rigorous pesticide management strategy that includes strict surveillance in the application of pesticides friendly to the environment, in order to overcome the sanitary barriers to the agricultural and livestock production of the Dominican Republic.

In that sense, the formula we are proposing to Dominican producers, society in general, and the international community represents a timely response to the expressed needs.

The levels of demand for "biopesticides" capable of conquering the most demanding markets, pose a great challenge for Latin America. An indicator of this need is exposed in the information obtained from Chile through the" TECHNOLOGICAL DEVELOPMENT AND ADOPTION OF ECOLOGICAL INSUMES: BASE LINE 2010 AND PROSPECTIVE 2030. Authors: Eduardo Donoso Belén Diaz Tobar Maria Bernarda Jimenez Guridi. March 2011 from Chile".

"The global market for biopesticides is expanding rapidly, an increase of 150 to 300% is estimated for the next 10 years. " The advances in this branch are based on very specific technologies. "In Chile, INIA, universities and private companies have developed appropriate technologies to use effective biological control of pests and diseases."

"In Chile there is a wide use of pesticides throughout the national territory, mainly in agricultural, veterinary, domestic, public health, among others. In addition, according to data from MINSAL 2007, there is an increasing use of these substances, doubling the import between 1998 and 2006, with figures of 26,728 tons for this last year " (Vallebuona, 2007). " However, Chile does not have studies to adequately assess the impact of established levels, let alone estimate that these residues represent the daily intake of an average Chilean, unlike the more industrialized countries that develop a sampling of food and tests to verify the amount of pesticide residues. That is, they take samples of the basic food crops, and the chosen sampling is based on the foods that constitute the average diet based on food surveys, Chile has only adopted the Codex references " (Citizen League for consumer protection, 2010) . Here they are considered as ecological pesticides, formulas that probably do not produce significant damage in the ecosystem, however, although the proportions of the ingredients used are indicated, they are apparently handmade formulas, for immediate use in the cultivation areas. See list of active ingredients of pesticides used in organic farming. " Active ingredients Total Microorganisms 45 Extracts of plant origin 51 Sulfur 17 Copper 22 Mineral oil 8 Other ^{∗} 6 Potassium soap 6 s / r 4 Total 159 ^{∗} Other: lime, paraffinic oil, etc.

The above list has several ingredients that can accumulate in soils and water sources and cause relative damage by accumulation, depending on the accumulated proportions, as in the cases of: Sulfur, Copper, Potassium. Others could represent situations of persistent nature due to their low polarity such as paraffinic and mineral oils.

In the ZAMORANO of Honduras, in the Department of Food Industry, an important study was carried out in November 2012 on the " Effect of the use of acetic acid, citric acid and calcium hypochlorite for the control of Escherichia coli (ATCC 25922) in lettuce (Lactuca sativa L.) and sweet pepper (Capsicum annuum L.)." The work was presented as a graduation thesis to opt for the title of Engineer in Food Agroindustry in the Bachelor's Degree in that institution.

This type of research is defining the interest of the countries of the region, to insert themselves in the ways of clean production, to be able to access the most demanding markets.

This gives strength to our proposal, in terms of validating the offer as a commercial formula and access to the markets that demand ecologically clean technologies for the export and import, especially of merchandise for food purposes.

### DETAILED DESCRIPTION OF PREFERRED REPRESENTATIONS

The first priority is to produce an ecological and economical product, as well as easy handling to provide a sustainable response to the need to solve the damage caused by diseases, caused by fungi, bacteria, yeasts, viruses and larvae, which affect the crops of vegetables and fruits for the local market and export.

It is not a common exterminator, like the known chemical pesticides, it is an ecological pesticide, which acts on the pests causing the necessary effect for them to be affected at a certain level of contact, producing an impact on them and their environment, with the recommended systematic application is sufficient to eliminate the pests indicated. It drastically controls the microbial colonies that are within its radius of action in such a way that it disinfects surfaces, equipment, production areas, producing a disinfection effect, drastically eliminating the microbial presence without causing secondary damage or leaving persistent chemical residues without damaging the environment nor leaving harmful bioaccumulation in food.

It is applied to crops of vegetables, fruit trees, gardening, in agricultural plantations, such as citrus, cocoa, avocado, coffee, mango, coconut, palm, corn, bean, okra, tomato, chili, eggplant, pineapple, sugar cane, orange, tangerine, lemon, pineapple, banana, plantain and other similar crops. Also, it is applied in developing and developed constructions, in hospitals, schools, libraries, museums, archives, laboratories, public and private offices, supermarkets, farms, food, pharmaceutical, chemical and other industries, with the aim of combating fungi, bacteria, yeasts, viruses, especially. The product is recommended in sustainable agricultural production, with organic certification or via certification. Also, it is recommended in formulas of diverse products for cleaning beauty, cleaning, industrial production of diverse products as ecological addictive, with the purpose of extending its useful life.

### PRODUCTION OF BACTERICIDES AND FUNGICIDES:

This product is used against different types of plant, animal and human diseases such as insects, fungal infections, bacteria, viruses and larvae. The majority of diseases registered in diverse agricultural plantations, both in citrus fruits, vegetables (tomatoes, cabbage, lettuce), grains (rice, beans, corn), in addition to cocoa fruits, are attacked from the early stages of the harvest. Some diseases are caused by the development of microbial metabolism in many of these plants, which are transferred to humans. Some of them are mycotoxins, present in cereal flours, tomato paste, spices, nuts, derivatives, coffee, wine, must, milk, or aromatic herbs. In many developed countries, high sums of money are invested in curative and corrective research; however, the most economical and least painful way is prevention. During the harvests of these vegetables, using a healthy and economic product is better than facing the fatality of cancer caused by these substances of fungal origin.

The product is not a common exterminator, as the known chemical pesticides. It is an ecological pesticide, which acts on the pests causing the necessary effect, so that these are affected at a certain level of contact, producing an impact on them and their environment. It drastically controls the microbial colonies that are in its radius of action in such a way that disinfects surfaces, equipment, production areas, producing a sterility effect by disinfection. It drastically eliminates the microbial presence without causing secondary damage or leaving persistent chemical residues. It does this without damaging the environment or leaving harmful bioaccumulation in food. Because of its composition and the concentration applied in those cases, there is no way the product can affect humans, animals or plants.

It is applied to vegetable crops, fruit trees, and gardening crops. It is also applied in agricultural plantations, such as citrus, cocoa, avocado, coffee, mango, coconut, palm, corn crops, beans, okra, tomatoes, peppers, eggplant, pineapples, canes of sugar, oranges, tangerines, lemons, pineapples, bananas, bananas and other similar crops. It can be applied in developing and developed buildings, hospitals, schools, libraries, museums, archives, laboratories, public and private offices, supermarkets, farms, food industries, pharmaceutical, chemical industry and others with the aim of combating fungi, bacteria and viruses, especially. The product is recommended in sustainable agricultural production, with organic certification or in the process of certification.

### ANTIMICROBIAL AND DISINFECTANT PROPERTIES

It possesses biocidal activity and disinfectant over a complex range of microorganisms, such as: bacteria, fungi, yeasts, endospores and viruses. It kills Gram positive, Gram negative bacteria, mycobacteria, *Staphylococcus aureus, Streptococcus mutans and Candida albicans.* Its ingredients act synergistically as sporicides. It is a disinfectant of the surfaces of floors and walls. Applications as a sterilizer: Disinfectant of medical instruments, respirators and endoscopes; disinfectant of hemodialyzers at 1% dilutions. It has a descaling action on organic material. It contains a surfactant, which removes and kills microorganisms.

Applications and uses as antimicrobial disinfectant: In hospitals, clinics, schools, office buildings, archives, libraries, schools, universities, food industries, pharmaceuticals, supermarkets, various stores, poultry and livestock farms, and various companies.
For application in walls, floors, ceilings of concrete or other civil construction materials, in interiors and exteriors, surfaces of glass, plastic or of any synthetic material: It is applied after washing with detergent as a smooth layer on the surface by rubbing it with a clean and soft material like a mop or a spongy roll. It can also be finely sprayed over the parts not available to the hands or other means.

### APPLICATION IN FRUIT, VEGETABLE AND WOOD TREES

If there are no sources of infection, apply preventatively, with spray pumps, manual pump from the trunk to the affected branches.

If the tree is affected by fungi or bacteria, the direct application of product in the affected areas produces fast results as it has already been proven in the application of the product in pests of fungi in citrus and mango. This is expected in citrus crops (in citrus plantations, against citrus tristeza, excellent results have been achieved), coffee, avocado, mango, soursop, medlar, sapodilla, cashews, breadfruit, coconut, tamarind or any other tropical or non-tropical species, where the product has excellent responses in the species mentioned, against fungi, nematodes, coleoptera, rust, mites, bacteria and other species of the genera mentioned.

### APPLICATIONS TO VEGETABLES

Vegetables such as tomatoes, peppers, aubergines, cabbages, lettuce, carrots, beets, are frequently affected by phytoparasites, fungi, bacteria, insects, larvae and other pests. The product has produced very satisfactory results in combating bacteria in peppers, and nematodes in eggplants.

The main advantage of the product over traditional pesticides and in relation to other pesticides is in its chemical nature. Many pesticides that are presented as organic or ecological pesticides, are formulated with substances that have in their chemical structures, chlorine atoms, sulfur or inorganic phosphorus. These substances in their decomposition could generate other substances with the potential for damaging secondary reactions. Other formulas are generated with commercial molecules that have metal atoms, which accumulate over time in crop soils and in different ecosystems, generating damage even in water sources.

Traditional pesticides, especially organochlorines, classified as Persistent Organic Compounds (POPs), are highly harmful to health due to their non-degradable chemical nature. They bioaccumulate in adipose tissues of biota and can cause serious damage to human health, generating cancer and damage to the kidneys, livers and other vital organs. They also affect the health of animals and damage, with its presence, the quality of foods of vegetable and animal origin. These are in a list of dirty substances created as a result of the agreement of Stockholm, 2001. Compliance with this agreement is the objective of several regulatory bodies, such as: UNEP, WHO, FAO, CODEX, PAHO, among others.

Our product is a formula of high solubility in water, made with organic molecules of low molecular weight, composed of carbon, oxygen and hydrogen atoms, which are easily assimilated in a beneficial way in plant and animal metabolism.

It is an ecological pesticide, which acts on pests causing the necessary effect so that these are affected at a certain level of contact, producing an impact on them and their environment and forcing them to leave the burrows after a systematic application drastically. Our product eliminates microbial presence without causing secondary damage, leaving persistent chemical residues, damaging the environment, or leaving harmful bioaccumulation in food. Its molecules are naturally found in food and are used as additives approved by international organizations that control the quality of food. Thus, we recommend its use in hospitals, schools, libraries, museums, archives, laboratories, public and private offices, supermarkets, farms, food, pharmaceutical, chemical and other industries, with the aim of combating fungi, bacteria and viruses.

Our product is aimed at agricultural production in general and can be used effectively in the treatment of different diseases generated by the indicated microorganisms. It can also be applied effectively in the direct treatment of vegetables and fruits destined for export markets to prevent damage from bacteria, fungi and viruses during the journey to these markets. It is recommended for effective use, especially, in sustainable agricultural production, with organic certification or in the way of certification, generally in greenhouse crops.

Our product can be used if the crop is affected by phytoparasites, fungi or bacteria, as it can occur in the cultivation of peppers, citrus fruits (in citrus plantations, against citrus tristeza, excellent results have been achieved). These diseases are difficult to eradicate with conventional pesticides.

This product presents an extraordinary opportunity for the Dominican State, the national productive sector, and the world to replace expensive pesticides that are harmful to agricultural production, water sources, flora, and fauna of the different ecosystems. Consequently, the contribution of our product is of extraordinary importance in the preservation of the environment and natural resources.

Our product can increase the entry of foreign currency to the country by reducing the number of vegetable shipments that are returned due to the presence of harmful pesticide residues.

It can also help us become an exporter of pesticides to countries that do not yet have products of similar quality, especially in Latin America, the Caribbean, and the United States.

### PROCEDURE FOLLOWED FOR THE TECHNICAL SOLUTION

TYPE OF PRODUCT: A universal ecological pesticide liquid (friendly to the environment) with a broad spectrum of action.

The formula is constituted by:
1.- 2-HYDROXY-1, 2, 3 TRICARBOXILIC ACID: 30%
2.- DIHYDROGEN DIOXIDE: 70%
3.- SOLVENT (DEIONIZED WATER) for dilutions at 1%, which is the recommended concentration for general purpose.

PRESENTATION: 740 mL plastic container with sprinkler or one gallon bottle (3.8 liters), both ready for immediate use.

The product can be prepared in a concentrated form that is at 100% (w/v) concentration in one gallon packs to be diluted to 100 gallons with a concentrations of 1% (w/v). The concentrate is also packaged in a 5 gallon container to be diluted in a 500 gallon volume, for concentrations of 1% (w/v). These types of dilutions are useful to be applied in the previously mentioned insect contamination.

### PRESENTATION OF THE INGREDIENTS:

Ingredient 1.- It is presented in a 25 kg bag with a D=1.665 g/cm³, a Solubility=3.83x10⁵ mg/L at 25 °C, and a pH= 2.2 in a 0.1N solution.

Ingredient 2.- It is corrosive and presented in a 12 gallon container with a D=1.2 g/cm³ at 20 °C, a Viscosity=1.245 cP at 20 °C, and a pH = 5.1.

Ingredient 3.- It is the solvent and is used in 55 gallon packs with a D= 1.0 g/cm³ at 4 °C, and a pH ranging from 5.0 to 7.0.

| PRESENTATION OF THE INGREDIENTS | | | | | | |
|---|---|---|---|---|---|---|
| Ingredients | Presentation | Density (g/mL) | Viscosity (Cp) | pH | Solubility (mg/L) | Characteristics |
| E | 25 kg bag | 1.665 | - | 2.2 (0.1 N) | 3.83x10⁵ | |
| G | 12 gal container | 1.2 | 1,245 | 5,1 | - | Corrosive |
| M | 55 gal container | 1.0 | - | 5 -7 | - | - |

| FORMULATION FOR PRODUCTION | | | | | | |
|---|---|---|---|---|---|---|
| Container Presentation | | | | Density | % | Average density |
| Ingredients | Gallon | Liter | Kilograms | g/mL | % | g/mL |
| E | 25 kg | | | 1.665 | 5.000 | 0.083 |
| G | 12 | 45.42 | 54.504 | 1.2 | 2.000 | 0.024 |
| M | 55 | 208.18 | 208.175 | 1 | 85.974 | 0.860 |

For the Production of a 300-gallon batch with a Weight of 1,178,681 kg

| | Consumption | Containers |
|---|---|---|
| Ingredient | Batch | Liters |
| E | 5.68 | |
| G | 5.68 | 200 |
| M | 1, 124.15 | 1,000 |
| | 1,135.5 | |

The proposal is to make the production in 2 defined stages to have better control of quality and inventories.

The first stage is the production of the product and the second is its packaging.

The proposal is to install 6 containers above the mixing vessel, so that it is not necessary to pump each dosage of raw materials because gravity would be used to feed the mixing vessel.

Each container of liquid raw material would be installed on load cells, so a PLC can be used. In this way, adding each dose would be automatic, so human error would be eliminated. Besides, an automatic system would reduce automatically what is used from the inventory, allowing a constantly updated inventory.

Gravity would also be used for packaging. It is recommended to install a tank with a capacity of 750 gal at a minimum height of 2.5 meter. For filling, it is recommended to use 4 overfill prevention valves.

### CONCENTRATIONS:

The product can be manufactured in two different types of concentrations:
1.- The concentrated product.
2.- The product of 1% (w/v) concentration.

### PRESENTATION:

1.- Container of 740 mL with sprinkler, equivalent to 26 ounces.
2.- Container of 3,785 mL, equivalent to 8.34 pounds, or 133.4 ounces.

### DILUTIONS AND USES:

- The concentrated material is elaborated to facilitate transport due to its smaller volume.
- The concentrate can be used to be diluted at different commercial concentrations:
- 3.785 grams of concentrate or 8.34 pounds of concentrate produce 100 gallons of the product with 1% concentration (w/v).
- 55 gallons of the concentrated product diluted at 1% (w/v) dilution generates 5,500 gallons.

### RECOMMENDED CONCENTRATION:

- The concentration at 1% (w/v) is recommended for microorganisms, such as bacteria, fungi, and different types of viruses, especially in formulas for cleaning products, paint for interiors and exteriors, emulsions, and water paint.

In the preparation of a 500 gallon batch at a concentration of 1%, the following are mixed:
- L.- 2-HYDROXY-1,2,3-TRICARBOXYLIC ACID, 0. 5%, equivalent to 9.45 kg
- G.- DIHYDROGEN DIOXIDE, 0.5%, equivalent to 9.45 kg
- M.- SOLVENT (DEIONIZED WATER), 99.0%, equivalent to 1892.5 kg

All the ingredients mixed without the solvent represent the concentrated formula. A 1% dilution of the formula is effective to combat the presence of microorganisms (fungi, bacteria, yeasts and viruses) on a surface through cleaning products and painting formulas. For such purposes, 18.93 kg of the concentrate can be used to make a batch of 500 gallons to which the ingredients for the cleaning agent or the paint formula are added.

## Claims

1. Composition for the control of pests of microbial origin, comprising 0.7% dihydrogen dioxide, 0.3% 2-hydroxy-1, 2,3 tricarboxylic acid and 99% water, treated as solvent; this proportion represents 1% of the concentrated product (70% dihydrogen dioxide and 30% 2-hydroxy-1,2,3 tricarboxylic acid); the product possesses biocidal and disinfectant activity over a complex range of microorganisms, such as bacteria, fungi, yeasts, endospores, and viruses; it kills Gram positive, Gram negative bacteria, mycobacteria, *Staphylococcus aureus, Streptococcus mutans,* and *Candida albicans;* antimicrobials have a deadly effect in microorganisms with aerobic and anaerobic metabolism; a 1% dilution of the product is effective to combat the presence of microorganisms (fungi, bacteria, yeast and viruses), such as in diseases of citrus plantations affected with HLB, huanglongbing or citrus greening disease; it has very positive effects in cocoa plantations for export with organic certification affected by fungi, and any other diseases of microbial origin that affect vegetable and fruit crops; it can also be used for the treatment of vegetables for export with organic certification; diseases in animals and humans can be treated and cured with this formula, and, for this purpose, concentrations between 1% and 5% can be used; the 1% dilution can also applied on surfaces through cleaning products and paint formulas; this dilution can also be used in cosmetics, beauty products, and goods available in the domestic economy; it can also be used as an antimicrobial additive to extend the life of products; for this purpose, for example,18.93 kg of the concentrate (70% of dihydrogen dioxide and 30% of 2-hydroxy-1,2,3 tricarboxylic acid) is diluted in a volume of 500 gallons or 3.785 kg in a volume of 100 gallons; to those volumes, the ingredients corresponding to the formula of the cleaning agent, paint, cosmetics, or any other product are added to preserve the product from microorganisms; Our product used in any of the recommended concentrations and with established controls has an ecologically clean nature.

2. In a concentration of active ingredients at 1% (w/v), the composition of claim 1 **characterized by** being effective to combat diseases of microbial origin with the aim of fighting fungi, bacteria, yeasts, viruses, and larvae in fruit and vegetables crops, such as avocado, coffee, mango, coconut, palm tree, corn crops, beans, okra, sugar cane, oranges, tangerines, lemons, passion fruit, cocoa, pineapples, bananas, bananas and other agricultural crops, ornamental plants for gardening, recreational parks, and similar plants.

3. The composition of claim 1 **characterized by** that its active ingredients, dihydrogen dioxide and 2-hydroxy-1,2,3-tricarboxylic acid, have systemic effects on trees, fruit trees, vegetables, and gardens that have been treated for different diseases of microbial origin, generating an important added value in the health of the plant.

4. When applying a 1% (w/v) concentration, the composition of claim 1 **characterized by** the effective control of microorganisms in plantations of vegetables, fruits and vegetables, affected by fungi, bacteria, and viruses of any kind.

5. The composition of claim 1 **characterized by** the effective control of larvae in mango trees, tamarind, and others affected by the same disease when it is applied periodically to the trunk and the branches of each tree in a 1% concentration every week from the flowering stage extending to the first two months, resulting in excellent results.

6. The composition of claim 1 **characterized by** the control of anaerobic bacteria and of any other type; it has been tested with success against the terrible disease called the death of citrus or sadness, whose most serious version is caused by a Gram negative bacterium known as the HLB; for an effective cure, it is recommended to apply every week to the affected plants a 1% dilution as a fine mist with a sprinkler; this application, prepared from the original formula using the concentrate, completely covers the crown of the tree and is applied until the disease subsides.

7. The composition of claims 1, 4 and 6 **characterized by** the control of fungi, bacteria and viruses, in the plantations of cocoa, corn, beans and other plantations affected by fungi, bacteria and viruses; for these cases, the formula can be used in 1% dilutions weekly for the first 3 months and then every month.

8. The composition of claim 1 **characterized by** its ecological nature and that it can be used in organic crops of all kinds in protected and unprotected systems against the indicated pests.

9. The composition of claims 1, 4, 6, and 7 **characterized by** the control of microorganisms; it is effective for the control of those pests (fungi, bacteria and viruses), before, during, and after vegetable and fruit harvests and for the efficient compliance with traceability standards and general quality management, including HACCP and ISO standards; in that sense, using the formula at 1% concentration, it must be applied by spraying thin films to vegetables before being packaged for their arrival to the markets.

10. The composition of claims 1, 4, 6, 7, and 9 **characterized by** the control of fungi, bacteria and viruses; it is effective for the control of these pests during the storage of seeds and grains; its use is recommended in the fumigation of warehouses, in walls, floors and ceilings by spraying weakly a single layer at 1% dilution; a thin layer dose can be applied to empty sacks before packing the grains and seeds for storage by using the 1% dilution; let dry and then pack grains and seeds.

11. The composition of claims 1, 4, 6 to 10 **characterized by** its fungicidal, bactericidal, and antiviral properties; it represents an excellent tool for the prevention of diseases of microbial origin, particularly in the preventive ecological control of mycotoxins, which represent a challenging danger in modern medicine.

12. The composition of claim 1 **characterized by** the control of bacteria, fungi, yeasts, endospores and viruses, kills Gram positive, Gram negative bacteria, mycobacteria, *Staphylococcus aureus, Streptococcus mutans,* and *Candida albicans* without creating negative impacts in all possible environments.

13. The composition of claim 1 **characterized by** the control of phytoparasites when these are part of a symbiotic system, such as with nematodes.

14. The composition of claims 1 to 3 and 12 **characterized by** its quantitative composition of 70% hydrogen peroxide, which for a concentration of 1% (g/ml) is sufficient in the combination to obtain the desired effect.

15. For a concentration at 1% (g/ml), the composition of claims 1 to 3 and 12, **characterized by** its quantitative composition of 30% of 2-hydroxy-1,2,3-tricarboxylic acid, is sufficient in the combination to obtain the desired effect.

16. In concentrations of 1% (g/ml), the composition of claims 1 to 3 **characterized by** that its concentrated formula can be used as an active ingredient for the control of microorganisms (bacteria, fungi and viruses) in the manufacture of paints, varnishes, emulsions, antiseptic solutions, and products for cleaning and treating the surface of interiors and exteriors in homes and industries, hotels, hospital schools, museums, archives, cathedrals, and others.

17. The composition of claim 1 **characterized by** that its composition of active ingredients has been shown to be effective against a type of rust in the passion fruit bush or patch; this pest attacks leaves and stems of the shrub until the vegetable is completely annihilated; our formula has shown effectiveness when applied weekly to the trunk of the shrub until the disease subsides.

18. The composition of claim 1 **characterized by** that its composition of active ingredients has demonstrated antimicrobial and disinfectant effectiveness; it has beneficial uses in animal health and an environmental impact of high ecological value in livestock farms, swine, poultry farms, bee farms, rabbit farms, and veterinary clinics; it can be applied to sterilize and clean the interior and exterior of facilities to raise the quality of the general health of farm animals with the aim of preventing diseases caused by fungi, bacteria, yeast, viruses, and larvae.

19. The composition of claims 1 and 18 **characterized by** that its composition of active ingredients has shown applications and uses against diseases of microbial and parasitic origin in farms, breeding facilities, and animal care; in livestock facilities, the application is carried out, always after washing, in a soft layer with conventional fumigation systems, with spray pumps, or simply finely sprayed in pens, being left in the area as a form of preventive protection; if the area is not washed, the effect is the same, but the application dose should be increased; the product can completely cure animals affected by diseases of microbial origin, including viral diseases, with periodic applications until the disease subsides.

20. The composition of claims 1, 18, and 19 **characterized by** that its composition of active ingredients eliminates sources of contamination to prevent future contamination; in the sources of contamination, the application must be more intense, applying concentrations of up to 5% depending on the degree of contamination; for preventive actions, after washing the installations, our product is sprayed as a thin layer, leaving it in the area as a form of preventive protection.

21. The composition of claims 1 and 18 to 20 **characterized by** that its composition of active ingredients can be used for the direct health care of farm and domestic animals to prevent bacterial and fungal diseases through weekly baths with the product at 1%; depending on the degree of exposure, this dose is suitable for farm animals such as cows, pigs, and rabbits, and home animals, such as dogs, cats and others.

22. The composition of claims 1, and 18 to 21 **characterized by** that its composition of active ingredients can be used to heal wounds and infections by fungi or bacteria in farm and domestic animals; this is done after bathing by placing directly onto the affected area of the animal a 5% dose of the product, which can be applied as a cream, ointment, or directly as a solution; the product should cover the affected area completely and the application in these cases should be once a day until the disease ceases; if the disease completely covers the body of the animal or more than a quarter of its outer surface, it is necessary to bathe the animal weekly with 1% dilutions until the disease ceases.

23. The composition of claims 1 and 18 to 22 **characterized by** that its composition of active ingredients can be used in poultry farms in their hygiene and in the disinfection process; the product is applied after general washing if possible after locating the sources of contamination in the facilities to eliminate them and to prevent future contamination.

24. The composition of claims 1 and 18 to 23 **characterized by** that its composition of active ingredients can be applied in the most common sources of contamination in poultry farms; in the straw beds where the hens defecate, the product should be applied periodically every three days as a 5% concentration dose; if it is done at that frequency and concentration, the bed can last longer before being changed; for preventive situations, the rest of the facilities should be sprayed after washing with a spray or spray pumps with a 1% dilution in a thin layer, being left in the area as a form of preventive protection.

25. The composition of claims 1 and 18 **characterized by** that its composition of active ingredients can be applied in beekeeping farms and apiary boxes to treat them by spraying the product in them before being used or when changing these for deterioration of any cause; the product effectively controls fungi and bacterial diseases that may occur in beekeeping production and that reduce their productivity; applications are made using 1% concentrations.

26. The composition of claims 1 and 12 **characterized by** that its composition of active ingredients with antimicrobial and disinfectant properties; these ingredients adapt
to the formulas of any cleaning agents and disinfectants for surfaces, walls, floors, bathrooms, hands, and work tools of different industrial areas with the aim of combating fungi, bacteria, yeast, viruses and larvae.

27. The composition of claims 1, 12 and 26 **characterized by** that its composition of active ingredients with antimicrobial and disinfectant properties can be used in the preparation of formulas for hygiene and cleaning used in the manufacturing of cleaning agents, disinfectants in general, deodorizers, hand disinfectants, disinfectants of clinical equipment, and disinfectants for production systems in the food and pharmaceutical industry.

28. The composition of claims 1, 12, 26 and 27 **characterized by** that its composition of active ingredients with antimicrobial properties can be used in applications for hygiene and disinfection in public and commercial facilities, various industries, schools, hospitals, clinics , libraries, museums, churches, cathedrals, public monuments, food industry, pharmaceutical and other industrial facilities, hotels, restaurants, and similar facilities, where hygiene is a fundamental requirement without exposing the health of people against harmful chemical agents.

29. The composition of claims 1, 12 and 26 to 28 **characterized by** that its composition of active ingredients with antimicrobial properties can be used in applications as a disinfectant material in 1% dilutions for the treatment of the packaging of export certified products, such as sacks, boxes, and others.

30. The composition of claims 1, 12 and 26 to 29 **characterized by** that its composition of active ingredients with antimicrobial properties can be used in applications for the treatment of fresh vegetables for export by applying small doses in a superficial manner in order to prevent or eliminate the presence of microorganisms.

31. The composition of claims 1, 12 and 26 to 30 **characterized by** that its composition of active ingredients with antimicrobial properties can be used in applications for hygiene and disinfection in warehouses where canned and fresh vegetables, fruits, grains, cereals, meats, and dairy are deposited; also, it can be used in the treatment of seed and grain packaging to avoid damage by bacteria or fungi.

32. The composition of claims 1 and 12 **characterized by** that its composition of active ingredients with antimicrobial properties can be used in applications against all types of epidemics of microbial origin, such as typhoid fever, cholera, leptospirosis, and others; for such purposes, general fumigations are carried out in the affected areas by the epidemic and in generalized or localized contamination sources through periodic fumigations with 1% solutions using spray pumps or any other conventional fumigation system.

33. The composition of claims 1 and 12 **characterized by** that its composition of active ingredients with antimicrobial properties can be used as an additive in the preparation of formulas to prevent and reduce the presence of microorganisms in industrial formulas of various uses; it can be used as a preservative in various cosmetic and cleaning products.

34. The composition of claims 1 and 12 **characterized by** that its composition of active ingredients orients its use in a natural way, especially in products for conditioning hair, shampoo, bath gel, moisturizing lotions for the body, creams, etc.

35. The composition of claims 1 and 12 **characterized by** that its composition of active ingredients has been successfully applied in the manufacture of paints, enamels, cooling agents or antifreeze, coolant, ArmorAll®, cooling liquids, cleaning agents, and tempera to increase the life of the product and prevent the transfer of pathogenic microorganisms when they come in contact with people.

36. The composition of claims 1 and 12 **characterized by** that its composition of active ingredients is recommended in the manufacture of products for personal hygiene, such as hand sanitizer, hair shampoo, medicinal soaps to treat skin diseases, fungicidal and bactericidal soaps, and treatments for scalp and skin diseases; it can also be used in the manufacture of adhesive and rubber brighteners, cleaning agents, foam baths, preservatives, cosmetics, detergents, latex emulsions, metal cutting fluids, hair and body gels, masks, pesticides, pigments, sanitary products, fabric softeners, printing inks, and wipes.

37. The composition of claims 1 and 12 **characterized by** that its composition of active ingredients has good compatibility with formulas containing as additives surfactants and emulsifiers, regardless of their ionic nature; our product is effective across the pH range that is normally found in cosmetics and does not transfer any color or odor to cosmetic products; it is 100% ecological, environmentally acceptable, rapidly biodegradable, not persistent in the environment, and does not bioaccumulate.

38. The composition of claims 1 and 12 **characterized by** that its composition of active ingredients of dihydrogen dioxide and 2-hydroxy-1,2,3 tricarboxylic acid (in the proportions of 70% and 30%, respectively) can be used to generate dilutions from the concentrate that are effective from 1% (w/v) or 10,000 ppm to a minimum of 10 ppm; this last concentration is effective as a preservative for fruits and vegetables against microbial activity for up to 30 days, preventing the vegetable from being damaged by microorganisms according to tests; formulas with bactericidal and fungicidal effectiveness can also be generated with a different percentage of dihydrogen dioxide ranging from 0.25%, 0.35%, 0.50% to 1% (or any other percentage in the mixtures between 0.25% to 1%); also, the percentage of 2-hydroxy-1,2,3-tricarboxylic acid of these formulas with bactericidal and fungicidal effectiveness can vary between 0.30%, 0.35%, 0.40%, 0.45%, 0.50% to 1% (or any other proportion in the mixture between 0.25% and 1%), which is enough for commercial formulas.

## Amended claims

### Amended claims under Art. 19.1 PCT

1. Composition for the control of pests of microbial origin, comprising 0.7% dihydrogen dioxide, 0.3% 2-hydroxy-1, 2,3 tricarboxylic acid and 99% water, treated as solvent; this proportion represents 1% of the concentrated product (70% dihydrogen dioxide and 30% 2-hydroxy-1,2,3 tricarboxylic acid); the product possesses biocidal and disinfectant activity over a complex range of microorganisms, such as bacteria, fungi, yeasts, endospores, and viruses; it kills Gram positive, Gram negative bacteria, mycobacteria, *Staphylococcus aureus, Streptococcus mutans,* and *Candida albicans;* its antimicrobial effects are deadly to microorganisms with aerobic and anaerobic metabolism; a 1% dilution of the product is effective to combat the presence of microorganisms (fungi, bacteria, yeast and viruses), such as in diseases of citrus plantations affected with HLB, huanglongbing or citrus greening disease; it has very positive effects in cocoa plantations for export with organic certification affected by fungi; and any other diseases of microbial origin that affect vegetable and fruit crops; for this purpose, for example,18.93 kg of the concentrate (70% of dihydrogen dioxide and 30% of 2-hydroxy-1,2,3 tricarboxylic acid) is diluted in a volume of 500 gallons or 3.785 kg in a volume of 100 gallons; it has an ecologically clean nature.

2. The composition of claim 1 **characterized by** that in a concentration of active ingredients at 1% (w/v), it is effective to combat diseases of microbial origin with the aim of fighting fungi, bacteria, yeasts, viruses, and larvae in fruit and vegetables crops, such as avocado, coffee, mango, coconut, palm tree, corn crops, beans, okra, sugar cane, oranges, tangerines, lemons, passion fruit, cocoa, pineapples, bananas, bananas and other agricultural crops, ornamental plants for gardening, recreational parks, and similar plants.

3. The composition of claim 1 **characterized by** that its active ingredients, dihydrogen dioxide and 2-hydroxy-1,2,3-tricarboxylic acid, have systemic effects on trees, fruit trees, vegetables, and gardens that have been treated for different diseases of microbial origin, generating an important added value in the health of the plant.

4. The composition of claim 1 **characterized by** the effective control of microorganisms when applied in a 1% (w/v) concentration in plantations of vegetables, fruits and vegetables affected by fungi, bacteria, and viruses of any kind.

5. The composition of claim 1 **characterized by** the effective control of larvae in mango trees, tamarind, and others affected by the same disease when it is applied periodically to the trunk and the branches of each tree in a 1% concentration every week from the flowering stage extending to the first two months, resulting in excellent results.

6. The composition of claim 1 **characterized by** the control of anaerobic bacteria and of any other type; it has been tested with success against the terrible disease called the death of citrus or sadness, whose most serious version is caused by a Gram negative bacterium known as the HLB; for an effective cure, it is recommended to apply every week to the affected plants a 1% dilution as a fine mist with a sprinkler; this application, prepared from the original composition using the concentrate, completely covers the crown of the tree and is applied until the disease subsides.

7. The composition of claims 1, 4 and 6 **characterized by** the control of fungi, bacteria and viruses, in the plantations of cocoa, corn, beans and other plantations affected by fungi, bacteria and viruses; for these cases, the composition can be used in 1% dilutions weekly for the first 3 months and then every month.

8. The composition of claim 1 **characterized by** its ecological nature and that it can be used in organic crops of all kinds in protected and unprotected systems against the indicated pests.

9. The composition of claims 1, 4, 6, and 7 **characterized by** the control of microorganisms; it is effective for the control of those pests (fungi, bacteria and viruses), before, during, and after vegetable and fruit harvests and for the efficient compliance with traceability standards and general quality management, including HACCP and ISO standards; in that sense, using the composition at 1% concentration, it must be applied by spraying thin films to vegetables before being packaged for their arrival to the markets.

10. The composition of claim 1 **characterized by** the control of phytoparasites when these are part of a symbiotic system, such as with nematodes.

11. The composition of claims 1 to 3 **characterized by** its quantitative composition of 70% hydrogen peroxide, which for a concentration of 1% (g/ml) is sufficient in the combination to obtain the desired effect.

12. The composition of claims 1 to 3 **characterized by** its quantitative composition of 30% of 2-hydroxy-1,2,3-tricarboxylic acid is sufficient in the combination to obtain the desired effect.

13. The composition of claim 1 **characterized by** that its composition of active ingredients has been shown to be effective against a type of rust in the passion fruit bush or patch; this pest attacks leaves and stems of the shrub until the vegetable is completely annihilated; our composition has shown effectiveness when applied weekly to the trunk of the shrub until the disease subsides.

14. The composition of claim 1 **characterized by** that its composition of active ingredients has good compatibility with compositions containing as additives surfactants and emulsifiers, regardless of their ionic nature; our product is effective across the pH range that is normally found in cosmetics and does not transfer any color or odor to cosmetic products; it is 100% ecological, environmentally acceptable, rapidly biodegradable, not persistent in the environment, and does not bioaccumulate.

15. The composition of claims 1 and 12 **characterized by** that its composition of active ingredients of dihydrogen dioxide and 2-hydroxy-1,2,3 tricarboxylic acid (in the proportions of 70% and 30%, respectively) can be used to generate dilutions from the concentrate that are effective from 1% (w/v) or 10,000 ppm to a minimum of 10 ppm; this last concentration is effective as a preservative for fruits and vegetables against microbial activity for up to 30 days, preventing the vegetable from being damaged by microorganisms according to tests; compositions with bactericidal and fungicidal effectiveness can also be generated with a different percentage of dihydrogen dioxide ranging from 0.25%, 0.35%, 0.50% to 1% (or any other percentage in the mixtures between 0.25% to 1%); also, the percentage of 2-hydroxy-1,2,3-tricarboxylic acid of these compositions with bactericidal and fungicidal effectiveness can vary between 0.30%, 0.35%, 0.40%, 0.45%, 0.50% to 1% (or any other proportion in the mixture between 0.25% and 1%), which is enough for commercial compositions.
